Europäisches Patentamt

European Patent Office

Office européen des brevets

(11) Veröffentlichungsnummer : **0 438 809 B1**

(12) **EUROPÄISCHE PATENTSCHRIFT**

(45) Veröffentlichungstag der Patentschrift :
03.11.93 Patentblatt 93/44

(21) Anmeldenummer : 90125827.7

(22) Anmeldetag : 31.12.90

(51) Int. Cl.⁵ : **E04C 5/07**

(54) Armierungselement aus Kunststoff für die Armierung von Baustoffen oder dergleichen.

(30) Priorität : **24.01.90 DE 4001976**

(43) Veröffentlichungstag der Anmeldung :
**31.07.91 Patentblatt 91/31**

(45) Bekanntmachung des Hinweises auf die
Patenterteilung :
**03.11.93 Patentblatt 93/44**

(84) Benannte Vertragsstaaten :
**AT BE CH DE DK ES FR GB IT LI LU NL SE**

(56) Entgegenhaltungen :
EP-A- 0 024 539
WO-A-89/00493
DE-A- 1 936 078
DE-C- 3 820 368
FR-A- 1 534 302
FR-A- 2 389 583

(73) Patentinhaber : **MONOFIL-TECHNIK
Gesellschaft für Synthese Monofile mbH
Reutherstrasse 7
D-53773 Hennef (DE)**

(72) Erfinder : **Bloch, Klaus
Schwalbenweg 17
W-5205 St. Augustin 1 (DE)**
Erfinder : **Weber, Norbert
Haus Ölgarten 3
W-5202 Hennef 1 (DE)**

(74) Vertreter : **Müller-Gerbes, Margot
Friedrich-Breuer-Strasse 112
D-53225 Bonn (DE)**

## Beschreibung

Die Erfindung bezieht sich auf ein Armierungselement für Baustoffe, wie Beton, Zement, Mörtel, Gips, Bitumen oder Kunstharzverbundmaterialien aus Fasern endlicher Länge, gefertigt aus einem auf Basis Polypropylen extrudierten und hochverstreckten mindestens um das vierfache, bevorzugt mindestens um das Sechsfache und mehr verstreckten Monofil und Abtrennen quer zur Längserstreckung des Monofils, die zumindest auf einem Teil ihrer Oberfläche profiliert und deren durch das Abtrennen gebildete stirnseitige Trennflächen gerauht und/oder uneben sind.

Zur Substitution von Asbestfasern in den verschiedensten Anwendungsbereichen wie beispielsweise für Faserzementprodukte, Brems- und Kupplungsbeläge, Filtermedien, Dichtungen, Beton, Mörtel, Gips usw. werden in jüngster Zeit Glasfasern, Stahlfasern oder Polyacrylnitrilfasern eingesetzt. Glasfasern haben den Nachteil eines sehr geringen E-Moduls. Stahlfasern weisen zwar einen sehr hohen E-Modul auf, jedoch besteht die Gefahr, daß sie je nach Verbundmaterial nicht ausreichend chemikalienbeständig sind und zu rosten beginnen.

Das Einbetten geeigneter Fasern als Armierungselement in eine Verbundmaterialmatrix, beispielsweise Beton, Zement oder dergleichen, soll die Zugfestigkeit und Biegezugfestigkeit sowie die Bruchdehnung und Bruchenergie des so armierten Verbundmaterials möglichst erhöhen. Hierbei soll der Bruch nicht schlagartig eintreten, sondern sich durch Verformungen ankündigen und die aufnehmbare Bruchenergie soll größer als bei einem nicht armierten Verbundmaterial oder bekannten mit thermoplastischen Kunststoffasern armierten Materialien sein. Des weiteren fällt der Armierungsfaser die Aufgabe zu, die Bildung von Haarrissen und das Ausbreiten entstandener Risse zu hemmen.

Aus der WO 87/04208 sind bereits Armierungselemente für Beton bekannt, die eine der Dichte des rohen Betons annähernd entsprechende Dichte aufweisen. Hierbei sind die Armierungselemente entweder aus Stahl mit Hohlräumen ausgebildet oder aber aus mit Kunststoff ummantelten Stahlkernen oder in Sandwich-Ausführung erstellt. Diese Armierungselemente sind dabei mit ihren Dichten den Betondichten von etwa 1,3 bis 5 g/cm³ angepaßt. Die Herstellung derartiger Armierungselemente stellt sich bei kleinen Dimensionen als schwierig, da insbesondere das Erstellen von Sandwich-Elementen mit Kunststoff als Materialanteil aufwendig und unwirtschaftlich ist. Das gilt auch für die zwei Komponenten Polyolefinfaser gemäß der DE-OS 29 33 689, die aus einem Materialgemisch von Polyolefin, wie Polypropylen und Zement besteht.

Aus der DE-PS 35 39 185 ist auch ein Verfahren zum Herstellen von Polypropylenfäden mit hoher Festigkeit bekannt, bei der die Fäden nach dem Schmelzspinnverfahren und nachfolgender Verstreckung hergestellt werden, wobei jedoch zur Armierung von Polymerbetonfäden und -fasern mit sehr geringen Titern von 1 tex und weniger in Gestalt von Spinnfasern eingesetzt werden. Bei derartig feinen Fasern stellt sich auch das Problem der einwandfreien und gleichmäßigen Verteilung dieser Fasern in der zu verstärkenden Masse, beispielsweise Beton.

Aus der FR-A-2389583 sind Armierungsfasern für Beton und dergleichen bekannt, die aus Polyolefinen, insbesondere Polypropylen, durch Schmelzspinnen mit nachfolgender Verstreckung um mindestens das fünfzehnfache mit Abmessungen zwischen 2 und 35 Denier erhalten werden, die mittels rotierender Rollen verdrillt und auf Faserlängen zwischen 5 und 25 mm abgelängt werden. Diese bekannten sehr feinen Kunststoffasern lassen sich in größeren Mengen schlecht homogen in der Betonmasse verteilen, auch ist die Haftung zum Beispiel trotz Verdrillung verbesserungsbedürftig.

Für die Armierung von Baustoffen sollten die zur Armierung vorgesehenen Elemente, wie Fasern, folgende Eigenschaften besitzen:

1. Der Widerstand gegen Zugbeanspruchungen sowie die Festigkeit müssen möglichst hoch sein, das bedeutet, daß ein möglichst hoher E-Modul der Faser vorhanden sein sollte.

Synthetische Fasern auf Basis von Kunststoffen liegen hierbei zwischen Glasfasern und Stahlfasern mit ihrem E-Modul.

2. Bei Einsatz der Armierungsfasern in Baustoffen ist es erforderlich, daß die Fasern chemikalienbeständig und sowohl im alkalischen als auch im Säurebereich beständig sind, d.h. von pH-Wert 0 bis pH-Wert 14.

Die geforderte Alkaliresistenz wird beispielsweise von Asbestfasern, Glasfasern und Polyacrylnitrilfasern erfüllt, jedoch ist sie im Einzelfall zu untersuchen.

3. Damit die auf das Verbundmaterial wirkenden Kräfte partiell von den eingebetteten die Armierung bewirkenden Fasern übernommen und getragen werden können, muß die Armierungsfaser nicht nur gleichmäßig in dem Verbundmaterial verteilt werden und sich verteilen lassen, sondern sie muß auch über eine gute Haftung zur Matrix verfügen. Hierbei spielen nicht nur die Abmessungen der Faser und ihre Formgebund eine Rolle sondern auch ihre Oberflächenbeschaffenheit. Hierbei hat sich herausgestellt, daß Fasern mit Kreisquerschnitt mit glatter Oberfläche keine Verbesserung der Biege-, Zug- und Druckfestigkeit des Verbundmaterials erbringen, da sie sich leicht aus beispielsweise erhärtetem Zement herausziehen lassen, da sie keine ausreichende Haftung eingehen. Verbesserungen der Biegezugfestigkeit bringen bereits Fäden mit rechteckigen Querschnitten, auch bandartige Fasern. Eine Längsprofilierung von Rundfasern bringt eine gewisse Verbesserung der Biegezugfestigkeit, da eine etwas bessere Einlagerung in der Matrix ermöglicht wird.

Der Erfindung liegt die Aufgabe zugrunde, eine Faser als Armierungselement auf Basis extrudierbarer Kunststoffe für die Armierung von Baustoffen oder Kunstharzverbundmaterialien, insbesondere im Hinblick auf die Substitution von Asbestfasern zu schaffen, die eine verbesserte Haftung mit der Matrix, d.h. dem zu armierenden Material eingeht und sich gleichmäßig innerhalb des zu verstärkenden Materials verteilen läßt.

Diese Aufgabe wird gemäß der Erfindung durch ein Armierungselement gelöst, in dessen Oberfläche schräg zur Längserstreckung des Monofils verlaufende zueinander parallele Rillen eingeformt sind.

Um mit der bisher sehr preiswerten Asbestfaser als Armierungsfaser in einen wirtschaftlichen Wettbewerb treten zu können, wird erfindungsgemäß vorgeschlagen, daß Armierungselemente auf Basis von Polypropylen erstellt werden. Zur Erzielung der erforderlichen ausreichenden Zugfestigkeit und eines hohen E-Modules wird vorgeschlagen, daß das in Form von Monofilen extrudierte Polypropylen hochverstreckt wird, und zwar bis in einen Bereich hinein, in dem das verstreckte Monofil bereits zum Aufspleißen neigt. Auf diese Weise werden nicht nur ausreichend hohe E-Module für das Armierungselement aus Polypropylen erzielt, sondern gleichzeitig auch eine etwas rauhe Oberfläche in den Bereichen des Armierungselementes erzielt, die die Trennflächen beim Ablängen aus dem Monofil bilden, d.h. an den Stirnseiten bzw. Enden. Die durch die hohe Verstreckung bewirkte Spleißneigung des Polypropylen-Monofils bewirkt eine leichte Aufrauhung der Schnittflächen an den Enden des Armierungselementes, wodurch eine wesentlich verbesserte mechanische Verankerung dieser auch als Fasern bezeichneten Armierungselemente in der Matrix der Baustoffe, wie Beton, erreicht wird. Durch einseitiges Abschlagen oder Abhacken der Fasern von dem Monofil wird zugleich in Abhackrichtung in Verlängerung der Trennfläche einseitig ein vorstehender Wulst an den Enden der Faser gebildet, der als eine Art Haken ebenfalls eine zusätzliche Verankerung der Faser in der Matrix bewirkt.

Polypropylen weist zudem die erforderliche Resistenz im alkalischen und Säurebereich von pH 0 bis pH 14 auf, so daß es sich für Armierungselemente in Baustoffen und Zement und Beton mit Vorteil einsetzen läßt. Die Menge der als Armierung einem herzustellenden Verbundmaterial zuzusetzenden Fasern aus Polypropylen gemäß der Erfindung richtet sich nach dem Anwendungsgebiet und beträgt in der Regel zwischen 1 bis 8 Volumen-% Fasern, bezogen auf das zu verstärkende Material.

Zur Erhöhung der mechanischen Verankerung werden in die Oberfläche der Armierungslemente bevorzugt schräg zur Längserstreckung der extrudierten Monofile und Armierungselemente verlaufende zueinander parallele Rillen oder Riefen eingeformt.

Durch die erfindungsgemäß schräg zur Längserstreckung der Armierungselemente verlaufende Profilierung wird eine verbesserte Haftung durch mechanische Verankerung in der Matrix der zu armierenden Materialien erreicht. Dies ist insbesondere für Armierungselemente aus Kunststoffasern von Bedeutung, die von Hause aus eine glatte Oberfläche aufweisen. Die Profilierung in Gestalt von Rillen sollte unter einem Winkel von 30 bis 60° in bezug auf die Längsachse der Armierungselemente verlaufen. Die Profilierung selbst sollte abgerundet ausgebildet sein, um Kerbwirkungen zu vermeiden, wobei durch Eindrücken der Profilierung eine zusätzliche Verfestigung im Oberflächenbereich der Monofile und hieraus abgelängten Fasern erfolgt. Die Profilierung sollte etwa eine 2 bis maximal etwa 5 % der kleinsten Abmessung oder dem mittleren Durchmesser der Faser entsprechende Tiefe aufweisen. Unter kleinster Faserabmessung ist entweder der Durchmesser der Faser oder bei polygonalem Querschnitt das Maß der kürzesten Seite zu verstehen.

Um eine ausreichende und verbesserte Haftung der Faser zu der Matrix zu erreichen, wird vorgeschlagen, daß der Abstand der Rillen der Profilierung voneinander etwa dem einfachen bis fünfzigfachen der kleinsten Faserabmessung entspricht. Hierbei sollten bei Fasern mit sehr kleinen Querschnitten die Rillen relativ größere Abstände voneinander aufweisen als bei Fasern mit großen Querschnitten. Je nach Einsatzgebiet, Material und Endprodukt, mit dem die Faser armiert werden soll, kann die Faser eine Länge zwischen etwa 1,5 bis 10 cm aufweisen bei einem Querschnitt von etwa 0,025 bis 2,0 mm², vorzugsweise 0,05 mm² bis zu etwa 1,6 mm², wobei kürzere Fasern einen kleineren Querschnitt als längere Fasern normalerweise aufweisen. Die Faserlänge sollte das 0,5fache bis zweifache der kritischen Faserlänge betragen. Die Länge der Faser ist dabei abhängig vom Durchmesser der Faser, d.h. je länger die Faser, desto größer sollte der Querschnitt sein.

Die Fasern weisen bevorzugt einen polygonalen, mindestens dreieckigen Querschnitt mit abgerundeten Ecken auf. Insbesondere bei einem eckigen Querschnitt der Fasern mit gerader Eckenanzahl kann auch zusätzlich eine in Längserstreckung der Fasern durchlaufende Profilierung in Gestalt von Rillen oder Rippen vorgesehen sein, die zusammen mit der oberflächig verlaufenden schrägen Profilierung zu einer insgesamt stark profilierten Oberfläche der Faser führt. Eine vorteilhafte Ausgestaltung der Faser wird mit einem rechteckigen Querschnitt erzielt, wobei auf zwei einander gegenüberliegenden Seiten, insbesondere den längeren Rechteckseiten, die schräg zur Längserstreckung der Faser verlaufende rillenartige Profilierung ausgebildet ist. Die schräg zur Längserstreckung der Faser verlaufende Profilierung kann auch kreuzweise ausgeführt sein, d.h. mit einander kreuzenden Rillen.

Vorteilhafte Ausgestaltungen des erfindungsgemäßen Armierungselementes in Gestalt einer Kunststofffaser sind den kennzeichnenden Merkmalen der Ansprüche 2 bis 10 entnehmbar.

Für die erfindungsgemäße Armierungsfaser wird insbesondere isotaktisches Polypropylen mit hohem Kristallinitätsgrad mit einem MFI (230/5 kp) von etwa 0,4 bis 50, vorzugsweise 4 bis 20 g/10 Min., eingesetzt. Bevorzugt werden hierbei Homopolymere des Propylens, die eine hohe Härte, Steifheit und Zugfestigkeit bei ausreichender Zähigkeit aufweisen. Diese Homopolymere des Propylens zeichnen sich durch eine relativ hohe Kugeldruckhärte aus, die mindestens 70 N/mm$^2$ als 30 Sekundenwert, gemessen nach DIN 53 456, betragen sollte. Es ist jedoch auch möglich, dem Polymer bis zu 20 Gew.-% (bezogen auf das Polymer) Blockcopolymere des Propylens zuzusetzen, die jedoch eine ausreichend hohe Kugeldruckhärte aufweisen sollten. Die Blockcopolymere dienen der Verbesserung der Zähigkeit bei tiefen Temperaturen. Hierbei kommen Blockcopolymere z.B. auf Basis niederer $\alpha$-Olefine, wie Ethylen, infrage.

Dem Polypropylen sind die zur Verarbeitung üblichen Verarbeitungsstabilisatoren beigefügt, um das Polypropylen von während der Verarbeitung auftretenden Einwirkungen zu schützen, und einen thermischen Abbau bei der Verarbeitung zu verhindern. Solche Verarbeitungsstabilisatoren sind beispielsweise sterisch gehinderte Phenole, Phosphite, Tioäther, Phosphonite sowie ggf. in Verbindung mit weiteren Zusätzen, wie Calcium-Stearat oder dergleichen. Zur Einfärbung der Fasern kann dem Polypropylen ggf. auch Farbmittel bei der Verarbeitung zugesetzt werden.

Bei Schwarzeinfärbung der Fasern wird gleichzeitig eine UV-Stabilisierung erreicht.

Die erfindungsgemäße Armierungsfaser aus Polypropylen zeichnet sich durch ein sehr günstiges spezifisches Gewicht aus, das im Bereich von 0,9 bis 0,92 g/cm$^3$ liegt, hohe chemische Beständigkeit, praktisch 0 % Feuchteaufnahme, Schwindungsfreiheit, geringe Bruchdehnung von etwa 10 bis 12 %, gute Haftung durch gezielte Oberflächenprofilierung, die Möglichkeit unterschiedlicher Querschnittausbildungen in Verbindung mit der Oberflächenprofilierung und damit Anpassung an unterschiedliche Anwendungen. Die Qualität der erfindungsgemäßen Polypropylenfaser wird insbesondere durch die extreme Verstreckung der Faser aus Polypropylen, die mindestens das sechsfache, bevorzugt das achtfache und mehr beträgt, sowie die ausgewählte Profilierung der Oberfläche erreicht.

Als Herstellungsverfahren für das erfindungsgemäße Armierungselement in Gestalt einer Kunststofffaser wird vorgeschlagen, daß eine thermoplastische Masse auf Basis von Polypropylen mit einem MFI (230/5) von 0,4 bis 50 g/10 Min., vorzugsweise 4 bis 20 g/10 Min., bei Temperaturen von etwa 200 bis 270 °C aufgeschmolzen und zu Monofilen extrudiert wird, die Monofile nach Abkühlen bei einer unterhalb der Kristallittemperatur des eingesetzten Polypropylens liegenden Temperatur um das mindestens sechsfache, insbesondere achtfache und mehr, verstreckt werden und anschließend die Orientierungsspannungen durch Thermofixieren gelöst werden, dann die gereckten Monofile zumindest oberflächlich in den thermoplastischen Zustand auf Temperaturen von etwa 80 bis 140°C erwärmt und auf mindestens einem Teil der Oberfläche schräg zur Längserstreckung der Monofile verlaufende Rillen eingeformt werden, danach die Monofile bei einer Temperatur von etwa 100 bis 150 °C während einer Zeit von etwa 1 bis etwa 5 Sekunden getempert werden und danach die Monofile quer zu ihrer Längserstreckung in den gewünschten Längen der Armierungselemente durchtrennt werden, insbesondere abgeschlagen werden.

Das Verstreckungsverfahren kann einstufig oder auch in zwei Stufen vorgenommen werden, wobei die Verstreckung nur in Wasser oder nur in Heißluft oder in der ersten Stufe in Wasser und in der zweiten Stufe in Heißluft durchgeführt werden kann. Das Tempern kann in Wasser oder mit Heißluft erfolgen.

Die Erfindung wird nachfolgend anhand der Zeichnung und Ausführungsbeispielen erläutert. Es zeigen

Figur 1 bis 4        perspektivische Ansichten verschiedener Fasern

Figur 5        auszugsweise Darstellung des Trennschnittes der Faser vom Monofil.

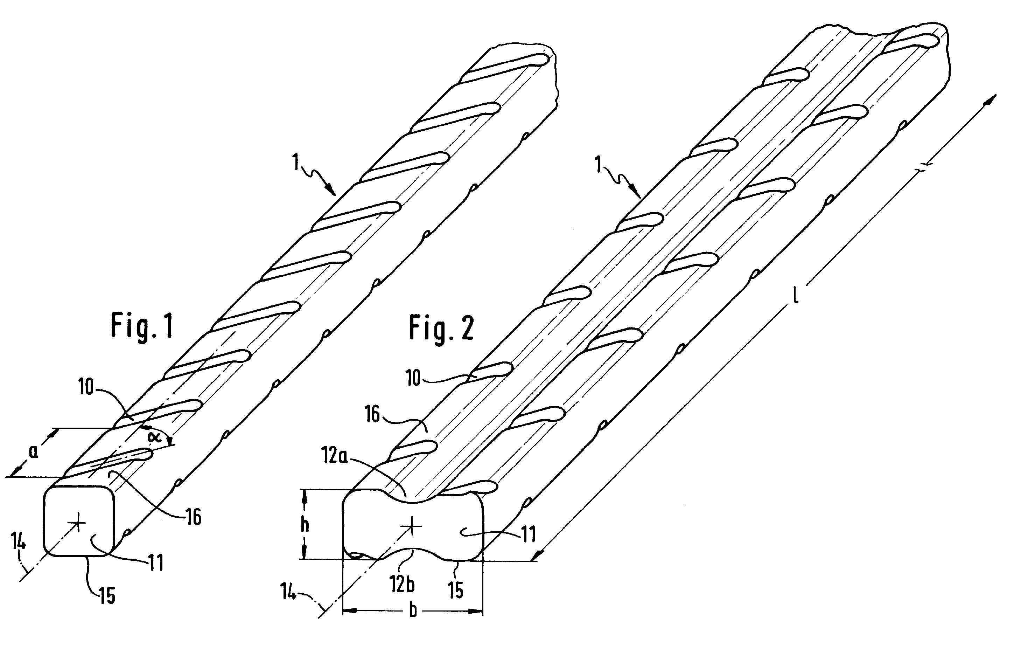

Figur 1 zeigt eine Faser aus Polypropylen mit rechteckigem, insbesondere quadratischem Querschnitt mit abgerundeten Ecken. Die Faser 1 ist auf ihrer Oberseite 16 und Unterseite 15, die einander gegenüberliegen, mit jeweils parallel zueinander und schräg zur Längserstreckung, siehe Längsachse 14 der Faser verlaufenden Rillen 10 profiliert. Die Rillen 10 sind unter dem Winkel $\alpha$ gegenüber der Längsachse 14 geneigt, wobei dieser Winkel $\alpha$ in dem gezeigten Beispiel etwa 45° beträgt. Die Rillen auf der Ober- und Unterseite können entweder gleichlaufend angeordnet sein, sie können jedoch auch in ihrer Schräge zueinander versetzt, d.h. über Kreuz verlaufend, angeordnet sein. Die Rillen können auch auf jeder Seite kreuzweise verlaufend angeordnet sein. Darüber hinaus kann auch die Profilierung auf der Ober- und Unterseite in Längserstreckung gegeneinander versetzt sein. Auf diese Weise wird eine umfassende und unregelmäßige Profilierung der Oberfläche der Faser erreicht, die eine verbesserte Haftung der Faser beim Einbetten in eine Matrix durch verbesserte mechanische Verankerung bewirkt. Der Abstand a der Rillen 10 voneinander ist nach den Gegebenheiten und den Abmessungen der Fasern zu wählen.

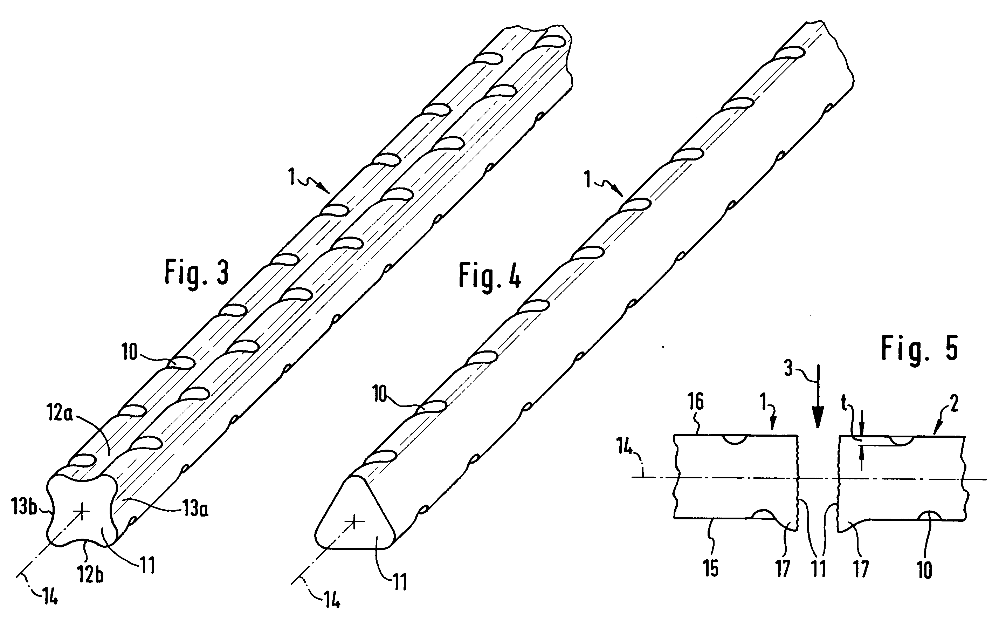

In der Figur 2 ist eine Faser aus Polypropylen dargestellt, die einen rechteckigen Querschnitt, siehe Stirnseite 11, mit abgerundeten Ecken aufweist, der durch sich auf der Oberseite 16 und Unterseite 15 ausgebildeten mittig in Längserstreckung der Faser verlaufenden Rillen 12a und 12b knochenförmig umgestaltet ist. Die Faser 1 weist wiederum auf der Oberseite und Unterseite schräg zur Längserstreckung verlaufende Profilierung in Gestalt der Rillen 10 auf, wobei die Rillen 10 eine Tiefe gleich, kleiner oder größer als die Längsrillen 12a, 12b aufweisen können. Bevorzugt sind jedoch die Rillen 10 nicht tiefer als die Längsrillen 12a, 12b. Die Länge 1 der Fasern beträgt bevorzugt etwa 1,5 bis 10 cm, die Breite der Fasern b etwa 0,2 bis 5,0 mm, Höhe h der Fasern etwa 0,1 bis 1,2 mm. Bei sehr kleinen Querschnitten der Fasern werden diese bevorzugt entweder mit rechteckigem oder quadratischem Querschnitt gemäß Figur 1 ausgebildet, wobei die Breite b zwischen 0,2 und 0,5 mm und die Höhe h zwischen 0,1 und 0,3 mm gewählt wird; bei größeren Querschnitten wird vorzugsweise eine zusätzliche Längsprofilierung, wie in der Figur 2, bei rechteckigem Querschnitt vorgeschlagen. Es ist auch möglich, die Fasern bei größerem Querschnitt, wie beispielhaft in der Figur 3 dargestellt, mit quadratischem Querschnitt mit abgerundeten Ecken auszubilden und auf allen vier Seiten parallel zur Längsachse 14 der Faser 1 verlaufend zusätzliche Rillen 12a, 12b und 13a, 13b an den Seiten auszubilden. Es ist auch möglich, Fasern mit rundem Querschnitt vorzusehen, die auf der Oberfläche mit schräg zur Längsachse verlaufenden Rillen, und zwar möglichst über Kreuz verlaufend, profiliert sind.

Auch Fasern mit dreieckigem Querschnitt mit abgerundeten Ecken sind möglich, wie beispielsweise Figur 4 zeigt, die entweder im Bereich der drei Längsseiten mit schräg zur Längsachse verlaufender Profilierung versehen sein können, oder aber, wie dargestellt, mit einer im Bereich der abgerundeten Längskanten der Faser zusätzlich vorgesehenen Profilierung in Gestalt sehr kurzer Rillen.

Die Fasern aus Polypropylen gemäß der Erfindung sind hochverstreckt, wodurch sich eine besondere Ausbildung der Trennflächen, d.h. der Faserenden 11 beim Herstellen der Fasern durch Abtrennen von einem Monofil ergeben. Dies ist in der Figur 5 schematisch dargestellt. Das Monofil 2, das verstreckt und mit der Oberflächenprofilierung in Gestalt der Rillen 10 ausgestattet ist, wird mit Hilfe eines Schlagmessers oder dergleichen 3, das einseitig, siehe Pfeil, auf das Monofil einwirkt, zu den einzelnen Fasern 1 verteilt. In der Figur 5 ist der abgetrennte Zustand schematisch dargestellt mit den beiden entstandenen Trennflächen 11, die die späteren Stirnseiten oder Faserenden der Faser 1 bilden. Durch das einseitige Abschlagen der Fasern 1 von dem Monofil 2 wird an der Austrittsseite der Schneideinrichtung ein kleiner Wulst 17 einseitig überstehend an dem Monofil bzw. dem Faserende ausgebildet, das später eine zusätzliche verbesserte Verankerung der Faser in der Matrix bewirkt. Darüber hinaus neigt das Monofil 2 infolge der hohen Verstreckung zum Verspleißen, wodurch die Trennflächen 11 leicht aufgerauht werden. Alles dies trägt dazu bei, daß die Fasern 1 eine verbesserte Haftung bei der späteren Einbettung in eine Matrix, wie beispielsweise Zement, Mörtel oder dergleichen, erzielen. Die Tiefe t der Rillen 10 liegt maximal bei etwa 0,01 bis 0,03 mm, wobei sich dies auch nach der Größe des Gesamtquerschnittes richtet.

Die Erfindung wird nachfolgend an einem Ausführungsbeispiel erläutert. Aus einem Homopolymerisat von Polypropylen mit einem Schmelzindex MFI 230/5 von 19 g/10 Min. und einer Kugeldruckhärte von 70 wird durch Aufschmelzen in einem Einschneckenextruder bei einer maximalen Massetemperatur von 260°C ein unverstrecktes Monofil mit einem rechteckigen Querschnitt mit h gleich 0,4 mm und b gleich 1,2 mm extrudiert und nachfolgend beim Durchziehen durch einen Heißluftkanal bei einer Temperatur von etwa 130°C um das Achtfache verstreckt. Nach Durchlaufen einer Temperstrecke von 140°C während 3 Sekunden wird die Oberflächenprofilierung mittels zweier geriffelter Walzen durchgeführt, wobei das Monofil durch den Walzenspalt gezogen wird und dabei auf der Oberseite und Unterseite zueinander parallel schräg zur Längsachse verlaufende und in bezug auf die Oberseite und Unterseite über Kreuz angeordnete Rillen 10 in die Oberfläche des Monofils eingedrückt werden. Danach kann das so hergestellte mit Oberflächenprofilierung versehene Monofil entweder direkt der Schneideinrichtung zum Ablängen der Fasern zugeführt werden oder erst aufgewickelt und später zu den Fasern zerkleinert werden.

Das so erhaltene gereckte und profilierte Monofil aus Polypropylen weist einen Endquerschnitt mit den Maßen h gleich 0,2 mm und b gleich 0,3 mm auf, wobei die Rillen auf der Ober- und Unterseite eine maximale Tiefe t von 0,01 mm und einen Abstand a von einander von 5 mm haben. Hieraus werden Fasern einer Länge von 2 cm abgelängt. Das Monofil hat die folgenden Eigenschaften:

```
Reißdehnung in % gemessen nach DIN 53 455:      10 - 12
Reißfestigkeit N/mm²  nach DIN 53 455:            320
E-Modul N/mm²  nach DIN 53 455:                  6800
```

Mit den erfindungsgemäß aus den Monofilen durch Abhacken hergestellten Armierungsfasern aus Polypropylen kann die Biegezugfestigkeit von damit armierten Materialien ebenso wie die Druckfestigkeit und die Spaltzugfestigkeit verbessert werden.

**Patentansprüche**

1. Armierungselement (1) für Baustoffe, wie Beton, Zement, Mörtel, Gips, Bitumen oder Kunstharzverbundmaterialien aus Fasern endlicher Länge, gefertigt aus einem auf Basis Polypropylen extrudierten und hochverstreckten mindestens um das vierfache, bevorzugt mindestens um das sechsfache und mehr verstreckten Monofil und Abtrennen quer zur Längserstreckung des Monofils, die zumindest auf einem Teil ihrer Oberfläche profiliert sind und deren durch das Abtrennen gebildete stirnseitige Trennflächen (11)gerauht und/oder uneben sind, **dadurch gekennzeichnet,** daß in die Oberfläche schräg zur Längserstreckung (14) des Monofils verlaufende zueinander parallele Rillen (10) eingeformt sind.

2. Armierungselement nach Anspruch 1,
**gekennzeichnet durch** einen mindestens dreieckigen Querschnitt, dessen in Längserstreckung (14) des Monofils verlaufende Ecken abgerundet sind.

3. Armierungselement nach einem der Ansprüche 1 bis 2,
**gekennzeichnet durch** eine in Längserstreckung (14) des Monofils durchlaufende Profilierung in Gestalt von Rillen (10) oder Rippen (12a, 12b; 13a, 13b).

4. Armierungselement nach Anspruch 1,
**dadurch gekennzeichnet,** daß Reihen von zueinander kreuzweise verlaufenden Rillen (10) auf der Oberfläche ausgebildet sind.

5. Armierungselement nach Anspruch 1,
**dadurch gekennzeichnet,** daß die Rillen (10) in bezug auf die Längserstreckung (14) des Monofils unter einem Winkel von 30 bis 60° verlaufend ausgebildet sind.

6. Armierungselement nach einem der Ansprüche 1 bis 5,
**dadurch gekennzeichnet,** daß die Rillen (10) eine etwa 2 % bis zu etwa 5 % des mittleren Durchmessers des Armierungselementes (1) entsprechende Tiefe aufweisen.

7. Armierungselement nach einem der Ansprüche 1 bis 6,
**dadurch gekennzeichnet,** daß es eine Länge von etwa 1,5 bis 10 cm und einen Querschnitt von etwa 0,025 bis zu 2,0 mm$^2$, vorzugsweise 0,05 mm$^2$ bis zu 1,6 mm$^2$ aufweist.

8. Armierungselement nach Anspruch 1,
**dadurch gekennzeichnet,** daß Polypropylen mit einem MFI (230/5) von 0,4 bis 50 g/10 Min., vorzugsweise 4 bis 20 g/10 Min. verwendet ist.

9. Armierungselement nach Anspruch 8,
**dadurch gekennzeichnet,** daß 100 bis 80 Gew.-% Homopolymere des Propylens eingesetzt und 0 bis 20 Gew.-% Blockcopolymere des Propylens eingesetzt sind.

10. Verfahren zum Herstellen von Armierungselementen (1) für Baustoffe oder Kunststoffverbundmaterialien gemäß einem der Ansprüche 1 bis 9 aus Fasern endlicher Länge aus extrudierbaren Kunststoffen, wobei endlose Kunststoffstränge geformt, verstreckt, mit einer Oberflächenprofilierung versehen und zu den Armierungselementen (1) abgelängt werden, **dadurch gekennzeichnet,** daß eine thermoplastische Masse auf Basis von Polypropylen mit einem MFI (230/5) von 0,4 bis 50 g/10 Min., vorzugsweise 4 bis 20 g/10 Min., bei Temperaturen von etwa 200 bis 270 °C aufgeschmolzen und zu Monofilen extrudiert wird, die Monofile nach Abkühlen bei einer unterhalb der Kristallittemperatur des eingesetzten Polypropylens liegenden Temperatur um das mindestens sechsfache, insbesondere achtfache und mehr, verstreckt werden und anschließend die Orientierungsspannungen durch Thermofixieren gelöst werden, dann die gereckten Monofile zumindest oberflächlich in den thermoplastischen Zustand auf Temperaturen von etwa 80 bis 140 °C erwärmt und auf mindestens einem Teil der Oberfläche schräg zur Längserstreckung (14) der Monofile verlaufende Rillen (10) eingeformt werden, danach die Monofile bei einer Temperatur von etwa 100 bis 150 °C während einer Zeit von etwa 1 bis etwa 5 Sekunden getempert werden und danach die Monofile quer zu ihrer Längserstreckung in den gewünschten Längen der Armierungselemente durchtrennt werden, insbesondere abgeschlagen werden.

## Claims

1. Reinforcing element (1) for building materials, such as concrete, cement, mortar, gypsum, bitumen or synthetic resin composites, made from fibres of finite length, produced from a polypropylene-based monofilament, extruded and stretched to at least four times, preferably at least six or more times its original length, and separated transversely to the longitudinal orientation of the monofilament, said fibres being profiled on at least part of their surface and their end parting faces (11) formed by separation being roughened and/or uneven,
characterised in that parallel channels (10) are formed in the surface at an angle to the longitudinal orientation (14) of the monofilament.

2. Reinforcing element according to claim 1, characterised by having an at least triangular cross-section, of which the corners extending in the longitudinal orientation (14) of the monofilament are rounded.

3. Reinforcing element according to either of claims 1 and 2, characterised by continuous profiling in the shape of channels (10) or ribs (12a, 12b; 13a, 13b) in the longitudinal orientation (14) of the monofilament.

4. Reinforcing element according to claim 1, characterised in that rows of channels (10) extending crosswise to one another are formed on the surface.

5. Reinforcing element according to claim 1, characterised in that the channels (10) run at an angle of 30 to 60° in relation to the longitudinal orientation (14) of the monofilament.

6. Reinforcing element according to any of claims 1 to 5, characterised in that the channels (10) have a depth corresponding to approx. 2% to approx. 5% of the average diameter of the reinforcing element (1).

7. Reinforcing element according to any of claims 1 to 6, characterised in that it has a length of approx. 1.5 to 10 cm and a cross-section of approx. 0.025 to 2.0 $mm^2$, preferably 0.05 $mm^2$ to 1.6 $mm^2$.

8. Reinforcing element according to claim 1, characterised in that polypropylene with an MFI (230/5) of 0.4 to 50 g/10 min., preferably 4 to 20 g/10 min., is used.

9. Reinforcing element according to claim 8, characterised in that 100 to 80 % by wt. homopolymers of propylene and 0 to 20 % by wt. block copolymers of propylene are used.

10. Process for manufacturing reinforcing elements (1) for building materials or synthetic composite materials according to any of claims 1 to 9 from fibres of finite length made from extrudable plastics, involving shaping and stretching continuous plastics strands, giving them a profiled surface and cutting them into lengths to make the reinforcing elements (1),
characterised in that a polypropylene-based thermoplastic composition with an MFI (230/5) of 0.4 to 50 g/10 min., preferably 4 to 20 g/10 min., is melted at temperatures of around 200 to 270 °C and extruded into monofilaments, said monofilaments, after cooling at a temperature below the crystalline melting temperature of the polypropylene employed, are stretched to at least six times their original length, in particular eight times or more, and the directional stresses are then released by heat setting, then the oriented monofilaments are heated at least superficially to a thermoplastic state at temperatures of around 80 to 140 °C and channels (10) running at an angle to the longitudinal orientation (14) of the monofilaments are formed on at least part of the surface, thereafter the monofilaments are conditioned at a temperature of around 100 to 150 °C for approximately 1 to 5 seconds and thereafter the monofilaments are severed, in particular struck off, at an angle to their longitudinal orientation, to the desired lengths for the reinforcing elements.

## Revendications

1. Elément d'armature (1) pour matériaux de construction comme le béton, le ciment, le mortier, le plâtre, le bitume ou les matériaux composites en résine synthétique en fibres de longueur donnée préparé à partir d'un monofil à base de polypropylène extrudé et étiré au moins à raison de 4 fois, de préférence de 6 fois et plus sa longueur après séparation perpendiculairement à la direction longitudinale du monofil qui est profilé sur au moins une partie de sa surface et dont les surfaces de séparation (11) de bout formées par son découpage sont rugueuses et/ou inégales, caractérisé en ce que des rainures parallèles l'une à l'autre (10) sont pratiquées obliquement par rapport à la direction longitudinale (14) du monofil dans sa surface.

2. Elément d'armature selon la revendication 1 caractérisé par une section au moins triangulaire dont les coins s'étendant en direction longitudinale (14) du monofil sont arrondis.

3. Elément d'armature selon une des revendications 1 à 2 caractérisé par un profilage s'étendant en direction longitudinale (14) du monofil sous la forme de rainures (10) ou de stries (12a, 12b, 13a, 13b).

4. Elément d'armature selon la revendication 1 caractérisé en ce que des séries de rainures se rapprochant en forme de croix (10) sont pratiquées à sa surface.

5. Elément d'armature selon la revendication 1 caractérisé en ce que les rainures (10) sont pratiquées dans un angle de 30 à 60° par rapport à la direction longitudinale (14) du monofil.

6. Elément d'armature selon une des revendications 1 à 5 caractérisé en ce que les rainures (10) présentent une profondeur correspondant à environ 2 à 5% du diamètre moyen de l'élément d'armature (1).

7. Elément d'armature selon une des revendications 1 à 6 caractérisé en ce qu'il présente une longueur d'environ 1,5 à 10 cm et une section d'environ 0,025 à 2,0 mm$^2$, de préférence de 0,05 mm$^2$ à 1,6 mm$^2$.

8. Elément d'armature selon la revendication 1, caractérisé en ce que le polypropylène mis en oeuvre présente un MFI (230/5) de 0,4 à 50 g/10 min de préférence 4 à 20 g/10 min.

9. Elément d'armature selon la revendication 8, caractérisé en ce que 100 à 80 parts en poids d'homopolymères de propylène sont utilisées, ainsi que 0 à 20 parts en poids de copolymères séquencés de propylène.

10. Procédé de préparation d'éléments d'armature (1) pour matériaux de construction ou matériaux composites en plastique selon une des revendications 1 à 9 à partir de fibres de longueur donnée en plastique extrudable, des cordons de plastique sans fin étant moulés, étirés, pourvus d'un profilage superficiel et coupés à la longueur des éléments d'armature (1), caractérisé en ce qu'une masse thermoplastique de polypropylène avec MFI (230/5) de 0,4 à 50 g/10 min , de préférence 4 à 20 g/10 min est fondue à des températures d'environ 200 à 270°C et extrudée en monofils, les monofils sont étirés, après refroidissement, à une température inférieure à la température de cristallite du polypropylène utilisé à raison d'au moins 6 fois en particulier 8 fois et plus sa longueur et, ensuite, les tensions d'orientation sont dissoutes par thermofixation, les monofils étirés sont chauffés, du moins superficiellement, à l'état thermoplastique à des températures de 80 à 140°C et des rainures (10) sont imprimées sur au moins une partie de sa surface, en oblique par rapport à la direction longitudinale (14) des monofils, les monofils étant ensuite cuits à une température d'environ 100 à 150°C pendant une période d'environ 1 à 5 secondes avant d'être coupés perpendiculairement à leur direction longitudinale à la longueur souhaitée des éléments d'armature, en particulier par un couteau.

Fig.1

Fig.2

9

Fig. 5

Fig. 4

Fig. 3